# EUROPÄISCHE PATENTSCHRIFT

(11) **EP 2 695 777 B1**
(45) Veröffentlichungstag und Bekanntmachung des Hinweises auf die Patenterteilung: **25.05.2016**
(21) Anmeldenummer: 13190470.8
(22) Anmeldetag: 28.04.2010
(51) Int. Cl.: B60R 21/231

(54) **Gassack für ein Fahrzeuginsassen-Rückhaltesystem und Verfahren zum Herstellen eines Fahrzeuginsassen-Rückhaltesystems**
AIRBAG FOR A VEHICLE OCCUPANT RESTRAINT SYSTEM AND METHOD FOR THE PRODUCTION OF A VEHICLE OCCUPANT RESTRAINT SYSTEM
SAC À GAZ POUR SYSTÈME DE RETENUE D'OCCUPANTS D'UN VÉHICULE ET PROCÉDÉ DE PRODUCTION D'UN SYSTÈME DE RETENUE D'OCCUPANTS D'UN VÉHICULE

(30) Priorität: 28.04.2009 DE 102009019766
(43) Veröffentlichungstag der Anmeldung: 12.02.2014
(62) Teilanmeldung aus: 10721727.5
(73) Patentinhaber: Takata AG, 63743 Aschaffenburg (DE)
(72) Erfinder: Schmidt, Torsten, 13055 Berlin (DE); Heuschmid, Rainer, 89233 Burlafingen (DE); Feller, Jens, 89171 Illerkirchberg (DE)
(74) Vertreter: Maikowski & Ninnemann

(56) Entgegenhaltungen:
- DE-A1- 4 125 530
- DE-U1- 29 517 951
- US-A- 4 181 325
- US-A1- 2002 180 196
- US-A1- 2006 131 847
- "INFLATABLE VEHICLE OCCUPANT RESTRAINT", RESEARCH DISCLOSURE, MASON PUBLICATIONS, HAMPSHIRE, GB, no. 373, 1 May 1995 (1995-05-01), pages 315-318, XP000518629, ISSN: 0374-4353

## Beschreibung

Die Erfindung betrifft einen Seitengassack für ein Fahrzeuginsassen-Rückhaltesystem eines Kraftfahrzeuges gemäß Anspruch 1 sowie ein Verfahren zum Herstellen eines Seitengassacks gemäß Anspruch 7.

Es ist bekannt, einen Gassack eines Fahrzeuginsassen-Rückhaltesystems aus mindestens zwei Lagen eines Gassackmaterials, z. B. eines textilen Gewebes, herzustellen. Die beiden Lagen werden über eine entlang ihres jeweiligen Umfangs verlaufende Naht so miteinander verbunden, dass zwischen den Lagen mindestens eine aufblasbare Kammer entsteht. Ein derartiger Gassack, der sich als Seitengassack zwischen einem Fahrzeuginsassen und einer Fahrzeuglängsseite entfaltet, ist z.B. in der DE 295 17 951 U1 offenbart.

In dem Dokument "INFLATABLE VEHICLE OCCUPANT RESTRAINT", RESARCH DICLOSURE, MASON PUBLICATIONS, HAMPSHIRE, GB, Nr. 373, 1. Mai 1995 (1995-05-01), Seiten 315-318, XP000518629, ISSN: 0374-4353 ist ein Gassack beschrieben, der zwei über eine Umfangsnaht miteinander verbundene Gassacklagen umfasst. Die Naht verläuft im hinteren Bereich des Gassacks gekrümmt und somit schräg zu einer durch die Fahrzeuglängs- und die Fahrzeughöhenrichtung aufgespannte Ebene. Im vorderen Bereich des Gassacks verläuft die Naht parallel zu einer durch die Fahrzeuglängs-und die Fahrzeughöhenrichtung aufgespannte Ebene.

Die US 2006/131847 A1 beschreibt einen Gassack mit einer Umfangsnaht, die im Bereich einer Frontkammer schräg zu einer durch die Fahrzeuglängs- und die Fahrzeughöhenrichtung aufgespannte Ebene orientiert ist. Die Frontkammer ist dabei einstückig mit einem hinteren Bereich des Gassacks ausgebildet, wobei die Naht eine durchgehende Naht ist, die zwei durchgehende Gassacklagen sowohl im Bereich der Frontkammer als auch im Bereich des hinteren Bereichs miteinander verbindet. Der hintere Bereich des Gassacks und damit der hintere Abschnitt der Naht verläuft parallel zu einer durch die Fahrzeuglängs- und die Fahrzeughöhenrichtung aufgespannte Ebene.

Das von der Erfindung zu lösende Problem besteht darin, einen Gassack zu schaffen, der eine möglichst gut aufpralldämpfende Kontur besitzt und der dennoch einfach herstellbar ist.

Dieses Problem wird durch den Seitengassack mit den Merkmalen gemäß Anspruch 1 sowie durch das Verfahren mit den Merkmalen gemäß Anspruch 7 gelöst. Weiterbildungen der Erfindung sind in den abhängigen Ansprüchen angegeben.

Danach wird ein Seitengassack für ein Fahrzeuginsassen-Rückhaltesystem bereitgestellt, mit
- einer ersten und einer zweiten Lage aus einem Gassackmaterial;
- mindestens einer zwischen der ersten und der zweiten Lage ausgebildeten, zum Schutz eines Fahrzeuginsassen aufblasbaren Kammer; und
- einer Naht, über die die erste und die zweite Lage entlang zumindest eines Abschnitts ihres jeweiligen Umfangs miteinander verbunden sind, wobei die Naht die einzige Umfangsnaht des Seitengassacks ist, und wobei
- sich der Seitengassack zwischen einem Fahrzeuginsassen und einer Fahrzeugseitenstruktur entfaltet, und wobei der Seitengassack so ausgebildet ist, dass die gesamte Naht bei montiertem und aufgeblasenem Seitengassack entlang einer Ebene verläuft, die schräg oder quer zu einer durch die Fahrzeuglängs- und die Fahrzeughöhenrichtung aufgespannten Ebene orientiert ist, und die aufblasbare Kammer des Seitengassacks ausschließlich durch die erste und die zweite Lage begrenzt ist.

Bei der Naht handelt es sich somit um eine Umfangsnaht, über die die beiden Lagen (insbesondere in Form zumindest näherungsweise deckungsgleicher Gassackzuschnitte) so miteinander verbunden sind, dass die zum Schutz des Fahrzeuginsassen aufblasbare Kammer durch die Lagen begrenzt ist, d.h. die Kammer erstreckt sich zwischen den beiden Lagen. Die Naht kann insbesondere nicht nur abschnittsweise, sondern entlang des gesamten jeweiligen Umfanges der beiden Gassacklagen verlaufen, d.h. die Naht kann umlaufend ausgebildet sein, so dass sie die aufblasbare Kammer vollständig umgibt.

Die Naht des erfindungsgemäßen Seitengassacks verläuft relativ zu einer Umfangsnaht eines im Fahrzeug eingebauten konventionellen Gassacks, die in einer durch die Fahrzeuglängs- und die Fahrzeughöhenrichtung aufgespannten Ebene (z.B. bei einem an oder in einem Fahrzeugsitz montierten Seitengassack oder einem Vorhanggassack) liegt, schräg bzw. quer. Insbesondere ist die Ebene, entlang derer sich die Naht erstreckt, zwar um eine Achse, die parallel zur Fahrzeughöhenrichtung weist, gegenüber der Ebene, die durch die Fahrzeuglängs- und die Fahrzeughöhenrichtung aufgespannt wird, verdreht, jedoch nicht um eine Achse, die parallel zur Fahrzeuglängsrichtung weist, verkippt. Mit anderen Worten verläuft insbesondere zwar die Fahrzeughöhenrichtung, nicht jedoch die Fahrzeuglängsrichtung parallel zu der Ebene, entlang derer sich die Naht erstreckt.

Durch diesen Nahtverlauf ist es möglich, bereits mittels der Naht die Kontur des Seitengassacks vorzugeben, insbesondere ohne dass zusätzliche konturdefinierende Mittel wie z. B. Fangbänder vorhanden sein müssen. Da ein Gassack üblicherweise entlang der Ebene der Umfangsnaht seine größte Ausdehnung im aufgeblasenen Zustand annimmt, kann bereits durch die Lage der Umfangsnaht (d.h. der Naht, die die erste und die zweite Lage miteinander verbindet) die Wirkdicke zumindest eines Abschnitts des Gassacks vorgegeben werden.

Durch die Orientierung der Naht quer zur Ebene, die durch die Fahrzeuglängs- und die Fahrzeughöhenrichtung aufgespannt wird, kann eine große Wirkdicke des Seitengassacks in Fahrzeugquerrichtung realisiert werden, z.B. ohne dass zusätzliche Mittel vorgesehen werden müssen, die die Ausdehnung des Seitengassacks in Fahrzeuglängsrichtung begrenzen.

In einer anderen Ausgestaltung der Erfindung sind die erste und die zweite Lage aus einem einstückigen, gefalteten Materialstück ausgebildet (Butterfly-Design), wobei die aufeinandergefalteten Abschnitte des Materialstückes mittels der Naht entlang ihres Umfanges (außerhalb der Faltkante) miteinander verbunden werden. Es ist jedoch auch denkbar, dass die erste und die zweite Lage aus zunächst separaten Materialstücken gebildet sind, die dann über die Naht miteinander verbunden werden.

Es wird darauf hingewiesen, dass die Naht, über die die erste und die zweite Lage miteinander verbunden sind, insbesondere eine Nähnaht ist. Es ist jedoch auch möglich, dass die Naht durch eine linienartige Klebverbindung realisiert ist.

Des Weiteren kann der erfindungsgemäße Seitengassack Befestigungsmittel zum Verbinden des Seitengassacks mit einem Gasgenerator zum Aufblasen des Seitengassacks aufweisen, die beabstandet zu der Naht angeordnet sind. Insbesondere sind die Befestigungsmittel durch mindestens eine Öffnung in der ersten oder der zweiten Lage ausgebildet, wobei die Öffnungen z.B. so beschaffen sind, dass Befestigungsbolzen zum Festlegen des Gasgenerators an dem Seitengassack durch sie hindurchgreifen können.

In einer anderen Weiterbildung weist der Seitengassack eine beabstandet zu der Naht, über die die erste und die zweite Lage miteinander verbunden sind, angeordnete Abströmöffnung auf, über die Gas aus dem Gassack in die Umgebung abströmen kann. Insbesondere ist diese Abströmöffnung so angeordnet, dass sie im montierten Gassack in Vorwärtsfahrtrichtung weist.

Der erfindungsgemäße Seitengassack ist insbesondere in oder an einem Fahrzeugsitz bzw. in oder an einer Fahrzeugtür anzuordnen, oder ist z.B. in Form eines Vorhanggassackes, der insbesondere entlang eines Dachholms des Fahrzeuges angebracht ist und der sich im aufgeblasenen Zustand entlang einer Fahrzeuglängsseite erstreckt, ausgebildet.

Die Erfindung betrifft auch ein Verfahren zum Herstellen eines Seitengassacks, wonach eine erste und eine zweite Lage eines Gassackmaterials über eine Naht entlang zumindest eines Abschnittes ihres jeweiligen Umfangs miteinander verbunden werden, wobei die Naht die einzige Umfangsnaht des Seitengassacks ist, und wobei die erste und die zweite Lage so ausgebildet sind, dass bei Anordnen des Seitengassacks in einem Fahrzeug derart, dass sich der Seitengassack zwischen einem Fahrzeuginsassen und einer Fahrzeugseitenstruktur entfaltet, die gesamte Naht entlang einer Ebene verläuft, die schräg oder quer zu einer durch die Fahrzeuglängs- und die Fahrzeughöhenrichtung aufgespannten Ebene orientiert ist, wobei die aufblasbare Kammer des Seitengassacks ausschließlich durch die erste und die zweite Lage begrenzt ist.

Danach werden die erste und die zweite Gassacklage in Form von Zuschnitten bereitgestellt, die zum Herstellen des Seitengassacks entlang ihres jeweils äußeren Umfangs miteinander verbunden werden. Die Zuschnitte sind so beschaffen (z.B. nicht deckungsgleich oder nicht kreisförmig), dass der Seitengassack zwar wie ein konventioneller Gassack (d.h. ein Gassack mit konventionellem Nahtverlauf) im Fahrzeug angeordnet wird, die Naht, die die beiden Gassacklagen miteinander verbindet, jedoch schräg zur durch die Fahrzeuglängs- und die Fahrzeughöhenrichtung aufgespannten Ebene und/oder zur Haupterstreckungsebene des Gassacks verläuft.

Die Erfindung wird im Folgenden anhand von Ausführungsbeispielen unter Bezugnahme auf die Figuren näher erläutert. Es zeigen:
- Figur 1: einen konventionellen Gassack;
- Figur 2: einen nicht erfindungsgemäßen Gassack;
- Figur 3: einen nicht erfindungsgemäßen Gassack;
- Fig. 4A - 4D: verschiedene Ansichten eines nicht erfindungsgemäßen Gassacks;
- Figur 5: eine Prinzipskizze zu einem nicht erfindungsgemäßen Gassack;
- Fig. 6A u. 6B: Ansichten eines nicht erfindungsgemäßen Gassacks;
- Figur 7: eine Seitenansicht eines Gassacks gemäß einem zweiten Ausführungsbeispiel der Erfindung; und
- Fig. 8A u. 8B: einen Gassack gemäß einem weiteren Ausführungsbeispiel der Erfindung.

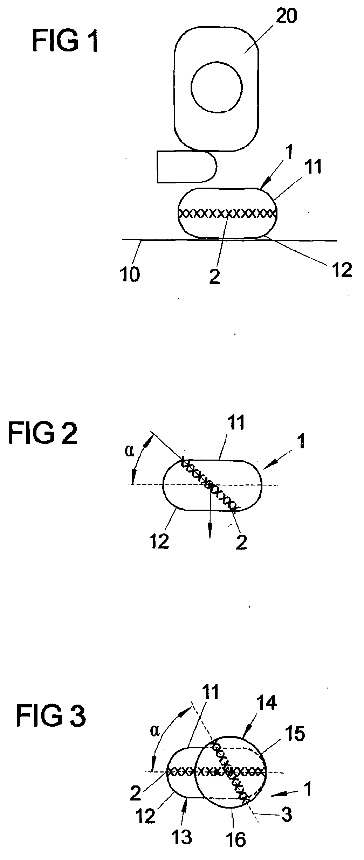

Figur 1 betrifft einen konventionellen Seitengassack 1, der sich im dargestellten aufgeblasenen Zustand zwischen einer Fahrzeugseitenstruktur 10 und einem zu schützenden Fahrzeuginsassen 20 erstreckt. Der Fahrzeuginsasse 20 befindet sich auf einem nicht dargestellten Fahrzeugsitz, wobei der Gassack 1 insbesondere in den Fahrzeugsitz oder in eine Fahrzeugtür der Fahrzeugseitenstruktur integriert ist.

Der konventionelle Gassack 1 weist eine erste Gassacklage 11 und eine zweite Gassacklage 12 auf, die mittels einer Umfangnaht 2 miteinander verbunden sind, so dass zwischen den Lagen 11, 12 eine aufblasbare Kammer ausgebildet ist. Der Gassack

1 ist so beschaffen und im Fahrzeug montiert, dass die Umfangsnaht 2 entlang einer Ebene, die durch die Fahrzeuglängsrichtung und die Fahrzeughöhenrichtung aufgespannt wird, verläuft, d.h. die senkrecht zur Wirkrichtung bzw. parallel zur Haupterstreckungsebene des Gassacks orientiert ist.

Durch diesen Verlauf der Umfangsnaht 2 weist der aufgeblasene Gassack in Richtung der Fahrzeuglängsachse seine größte Ausdehnung auf. Um die Wirkdicke des Gassacks zwischen dem Fahrzeuginsassen und der Fahrzeugseitenstruktur, d.h. entlang der Fahrzeugquerrichtung, zu erhöhen, können Fangbänder oder Abnäher (nicht dargestellt) vorgesehen sein, die die Ausdehnung des Gassacks in Fahrzeuglängsrichtung begrenzen und dadurch eine größere Ausdehnung des aufgeblasenen Gassacks in Fahrzeugquerrichtung bewirken.

Figur 2 zeigt schematisch einen erfindungsgemäßen Gassack 1, der wie der Gassack aus Figur 1 zwei Gassacklagen 11, 12 aufweist, die mittels einer Umfangsnaht 2, die entlang eines Abschnittes des Umfanges der jeweiligen Lage verläuft, miteinander verbunden sind.

Im Unterschied zur Figur 1 verläuft die Naht 2 bei im Fahrzeug montiertem Gassack jedoch nicht entlang einer Ebene, die durch die Fahrzeuglängs- und Fahrzeughöhenrichtung aufgespannt wird, sondern entlang einer Ebene, die unter einem Winkel α schräg zu dieser Ebene orientiert ist. Im gezeigten Beispiel ist die Ebene, entlang derer die Naht 2 verläuft, gewissermaßen gegenüber der durch die Fahrzeuglängs- und Fahrzeughöhenrichtung aufgespannten Ebene um den Winkel α um eine zur Fahrzeughöhenrichtung parallele Achse verdreht.

Die Erfindung ist natürlich nicht auf eine bestimmte Orientierung der Naht schräg zum konventionellen Nahtverlauf beschränkt, sondern es sind im Prinzip beliebige Nahtverläufe schräg zur durch die Fahrzeuglängs- und Fahrzeughöhenrichtung aufgespannten Ebene denkbar. Beispielsweise kann der Winkel α 0° bis 180 ° betragen.

Zudem kann die Ebene, entlang derer sich die Naht 2 erstreckt, auch dadurch gebildet gedacht werden, dass die Ebene entlang derer sich die konventionelle Naht erstreckt, d.h. die durch die Fahrzeuglängs- und Fahrzeughöhenrichtung aufgespannte Ebene, zusätzlich oder alternativ zu der Drehung um eine Achse in Fahrzeughöhenrichtung um
eine Achse, die parallel zur Fahrzeuglängsrichtung verläuft, und/oder um eine Achse, die parallel zur Fahrzeugquerrichtung verläuft, gedreht werden.

Darüber hinaus muss der Drehpunkt, um den die Ebene der konventionellen Naht gedreht wird, nicht auf einer Symmetrieachse des Gassacks liegen, sondern kann auch an dessen Rand oder auch außerhalb des Gassacks liegen, so dass die Erfindung allgemein Gassäcke betrifft, die eine Verbindungsnaht zwischen der ersten und der zweiten Lage aufweisen, die entlang einer Ebene verläuft, die in irgendeiner Weise schräg oder quer zu einer durch die Fahrzeuglängs- und Fahrzeughöhenrichtung aufgespannten Ebene orientiert ist.

Figur 3 zeigt anhand eines nicht erfindungsgemäßen Beispiels schematisch, dass es auch möglich ist, mehr als eine Umfangsnaht, die Lagen des Gassacks miteinander verbindet, vorzusehen, wobei die Umfangsnähte unterschiedlich orientiert sein können. Im Beispiel der Figur 3 weist der Gassack 1 einen unteren Abschnitt 13, der z. B. als aufblasbare Kammer des Gassacks ausgebildet ist, sowie einen oberen Abschnitt 14, der z. B. eine weitere Kammer des Gassacks bildet, auf. Der obere und der untere Abschnitt 13, 14 können jedoch eine gemeinsame Kammer des Gassacks ausbilden.

Der untere Abschnitt 13 wird durch die erste und zweite Lage 11, 12 gebildet, die entlang einer ersten Umfangsnaht 2 miteinander verbunden sind. Die Umfangsnaht 2 verläuft wie im konventionellen Gassack parallel zu einer Ebene, die durch die Fahrzeuglängs- und Fahrzeughöhenrichtung aufgespannt ist.

Der obere Abschnitt 14 des Gassacks 1 ist durch zwei weitere Lagen 15, 16 gebildet, die über eine zweite Umfangsnaht 3 miteinander verbunden sind, wobei die Gassacklagen 11 und 15 sowie 12 und 16 einstückig miteinander ausgebildet sind, d. h. diese Lagen jeweils eine durchgehende Lage bilden.

Die zweite Umfangsnaht 3 verläuft entlang einer Ebene, die gegenüber der durch die Fahrzeuglängs- und Fahrzeughöhenrichtung gebildeten Ebene, und damit relativ zu der ersten Umfangsnaht 2, um einen Winkel α verdreht ist, so dass der obere Abschnitt 14 des Gassacks gegenüber dem unteren Gassackabschnitt 13 gewissermaßen verdrillt ist.

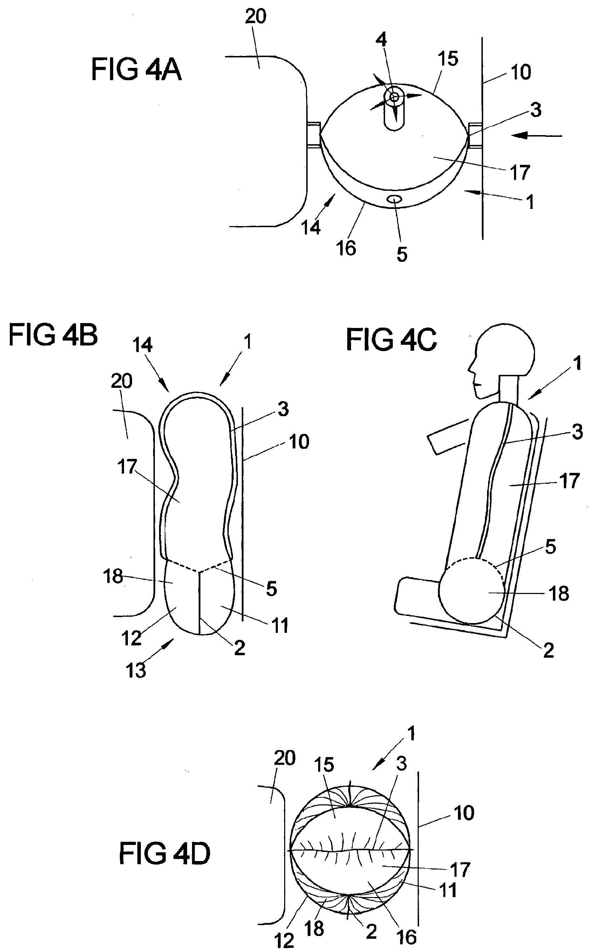

Die Figuren 4A bis 4D zeigen verschiedene Ansichten eines nicht erfindungsgemäßen Gassacks 1, der auf dem Prinzip der Figur 3 basiert. Im Einzelnen zeigt Fig. 4A eine Schnittansicht durch den oberen Abschnitt 14 des aufgeblasenen Seitengassacks 1, der sich zwischen dem Fahrzeuginsassen 20 und der Fahrzeugseitenstruktur 10 erstreckt. Figur 4B zeigt eine Ansicht des Gassacks 1 von der Fahrzeugfront her, Figur 4C eine Seitenansicht von der Fahrzeugseitenstruktur 10 aus gesehen und Figur 4D eine Ansicht des Gassacks von oben.

Der Gassack 1 weist ebenfalls einen unteren Abschnitt 13 auf, wobei die Gassacklagen 11, 12 des unteren Abschnitts 13 entlang der ersten Umfangsnaht 2 und Gassacklagen 15 und 16 des oberen Abschnittes 14 entlang der zweiten Umfangsnaht 3 miteinander verbunden sind. Der obere Abschnitt 14 weist im montierten Gassack zum Fahrzeughimmel und erstreckt sich insbesondere entlang einer Rückenlehne eines Fahrzeugsitzes, auf dem sich der zu schützende Fahrzeuginsasse befindet.

Die erste Umfangsnaht 2 ist entlang einer Ebene orientiert, die durch die Fahrzeuglängsund die Fahrzeughöhenrichtung aufgespannt wird, während die zweite Umfangsnaht 3 entlang einer Ebene verläuft, die quer zu der durch die Fahrzeuglängs- und die Fahrzeughöhenrichtung aufgespannten Ebene verläuft. Insbesondere verläuft die zweite Umfangsnaht 3 entlang einer Ebene, die näherungsweise parallel zur Rückenlehne des Fahrzeugsitzes orientiert ist.

Gemäß Figur 4A wird durch die mittels der Umfangsnaht 3 miteinander verbundenen Gassacklagen 15 und 16 des oberen Abschnitts 14 eine aufblasbare obere Kammer 17 begrenzt. Im Bereich der oberen Kammer 17 befindet sich ein Gasgenerator 4, der über Befestigungsbolzen (nicht dargestellt), die durch Öffnungen in der Gassacklage 15 hindurchgreifen, mit einer Fahrzeugstruktur (insbesondere einer Rückenlehne eines Fahrzeugsitzes) verbunden ist.

Des Weiteren ist im Bereich der oberen Kammer 17 des Gassacks eine Ausströmöffnung 5 vorgesehen, über die Gas aus der oberen Kammer in die Umgebung abströmen kann. Die Ausströmöffnung 5 befindet sich in der zur Fahrzeugfront weisenden Gassacklage 16 und somit beabstandet zu der Umfangsnaht 3.

Der obere Abschnitt 14 des Gassacks, d. h. die obere Kammer 17, ist von dem unteren Bereich 13 des Gassacks über eine Trennnaht 5 abgetrennt, so dass durch die Gassacklagen 11 und 12, die über die erste Umfangsnaht 2 miteinander verbunden sind, eine weitere, untere Kammer 18 definiert wird. Durch die unterschiedlichen Orientierungen der ersten und der zweiten Umfangsnaht 2, 3 ist die obere Kammer 17 gegenüber der unteren Kammer 18 verdreht.

Zudem besitzt die obere Kammer 17 im aufgeblasenen Zustand des Gassacks 1 bedingt durch den Verlauf der Umfangsnaht 3 entlang einer Ebene quer zur Fahrzeuglängsrichtung, d.h. in Wirkrichtung des Gassacks, eine größere Dicke als die untere Kammer 18, deren Umfangsnaht 2 sich entlang einer Ebene, die durch die Fahrzeuglängs- und Fahrzeughöhenrichtung aufgespannt ist, erstreckt. Die untere Kammer 18 besitzt durch den Verlauf der Naht 2 entlang der Fahrzeuglängsrichtung ihre größte Ausdehnung.

Es wird darauf hingewiesen, dass die Naht 5, die den oberen Abschnitt 14 des Gassacks von dem unteren Abschnitt 13 abtrennt, optional ist. Es ist auch denkbar, dass der obere und der untere Abschnitt des Gassacks eine gemeinsame Kammer ausbilden. Zumindest ist es denkbar, dass die obere Kammer 17 mit der unteren Kammer 18 über Überströmmittel, z. B. in Form einer Unterbrechung der Naht 5, in Strömungsverbindung miteinander stehen.

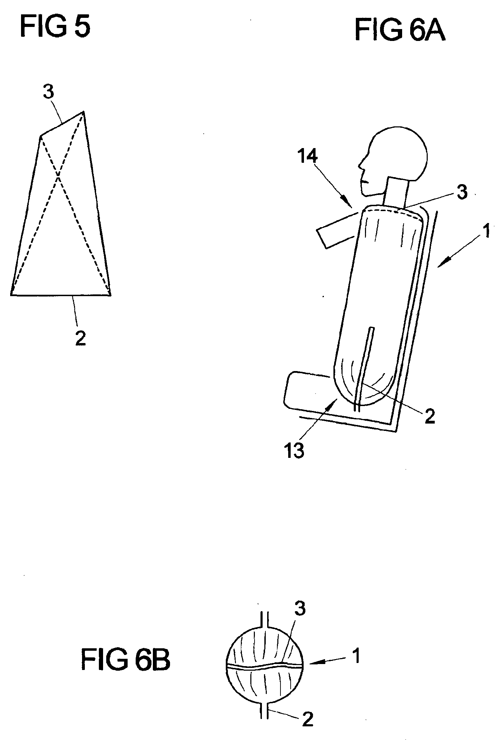

Das Prinzip, dass der obere Abschnitt des Gassacks gegenüber dem unteren Abschnitt des Gassacks verdreht ist, ist in Fig. 5 angedeutet, die nur die beiden gegeneinander verdrehten Nähte 2, 3 zeigt.

Die Figuren 6A und 6B zeigen eine Seitenansicht bzw. eine Draufsicht eines derartigen (nicht erfindungsgemäßen) Gassacks, dessen unterer Abschnitt 13 die erste Umfangsnaht 2, die entlang einer Ebene quer zur Ebene, die durch die Fahrzeuglängs- und Fahrzeughöhenrichtung aufgespannten ist, verläuft, und dessen oberer Abschnitt 14 die zweite Umfangsnaht 3, die entlang der aus Fahrzeuglängsrichtung und Fahrzeughöhenrichtung gebildeten Ebene verläuft, aufweist. Der obere und der untere Abschnitt 13, 14 des Gassacks bilden insbesondere eine gemeinsame Kammer aus.

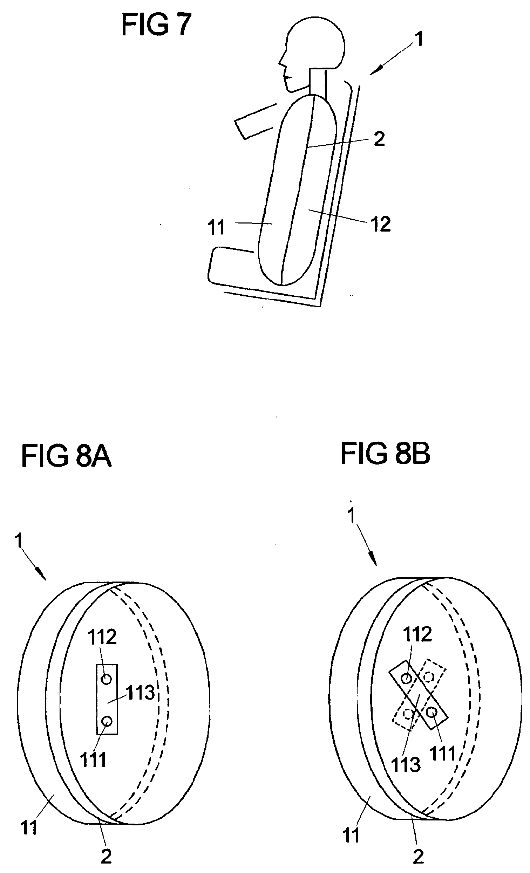

Die Figur 7 betrifft ein weiteres Ausführungsbeispiel eines erfindungsgemäßen Gassacks 1. Der Gassack 1 weist zwei Gassacklagen 11, 12 auf, die entlang einer einzigen, umlaufenden Umfangsnaht 2 miteinander verbunden sind, so dass durch die beiden Gassacklagen 11, 12 und die Umfangsnaht 2 eine einzige Kammer des Gassacks begrenzt ist.

Es ist natürlich auch denkbar, dass.die Gassacklagen 11, 12 und die umlaufende Umfangsnaht 2 mehrere Kammern des Gassacks begrenzen, z. B. dadurch, dass zwischen den Lagen 11, 12 Trennmittel, beispielsweise in Form eines Bandes oder eines Abnähers, vorgesehen sind, so dass zwischen den Lagen 11, 12 mehrere aufblasbare Kammern entstehen. Die umlaufende Naht 2 erstreckt sich gemäß dem Beispiel der Fig. 7 im aufgeblasenen Zustand des Gassacks 1 entlang einer Ebene, die quer zu einer aus der Fahrzeuglängs- und Fahrzeughöhenrichtung aufgespannten Ebene und parallel zur Rückenlehne des Fahrzeugsitzes, auf dem sich der zu schützende Fahrzeuginsasse befindet, orientiert ist.

Figuren 8A und 8B betreffen eine Abwandlung des Ausführungsbeispiels aus Figur 7, wobei ein Schnitt durch den Gassack gezeigt ist. Der Gassack 1 weist Befestigungsmittel in Form zweier Öffnungen 111, 112 in der ersten Gassacklage 11 auf, die zum Verbinden des Gassacks 1 mit einem Gasgenerator (nicht dargestellt) dienen. Im Bereich der Öffnungen 111, 112 ist zudem eine Verstärkungslage 113, z. B. aus einem Gassackmaterial, mit der ersten Lage 11 verbunden.

Gemäß Figur 8A sind die Öffnungen 111, 112 - bezogen auf den montierten Zustand des Gassacks - entlang der Fahrzeughöhenrichtung übereinander angeordnet. Im Beispiel der Figur 8B sind die Öffnungen 111, 112 und die Verstärkungslage 113 jedoch verdreht, d. h. entlang einer Achse, die schräg zur Fahrzeughöhenrichtung verläuft, angeordnet.

Es wird darauf hingewiesen, dass Elemente der verschiedenen, oben beschriebenen Ausführungsbeispiele selbstverständlich auch in Kombination miteinander verwendet werden können, z. B. kann die in den Figuren 8A und 8B gezeigte Anordnung zum Befestigen eines Gasgenerators auch mit Elementen der übrigen Ausführungsbeispiele verwendet werden.

### Bezugszeichenliste

- 1: Seitengassack
- 2, 3: Naht
- 4: Gasgenerator
- 5: Ausströmöffnung
- 10: Fahrzeugseitenstruktur
- 11: erste Lage
- 12: zweite Lage
- 13: unter Abschnitt
- 14: oberer Abschnitt
- 15, 16: weitere Lagen
- 17: obere Kammer
- 18: untere Kammer
- 20: Fahrzeuginsasse
- 111, 112: Öffnung
- 113: Verstärkungslage

## Patentansprüche

1. Seitengassack für ein Fahrzeuginsassen-Rückhaltesystem eines Kraftfahrzeuges, mit
- mindestens einer ersten und einer zweiten Lage (11, 12) aus einem Gassackmaterial;
- mindestens einer zwischen der ersten und der zweiten Lage (11, 12) ausgebildeten, zum Schutz eines Fahrzeuginsässen (20) aufblasbaren Kammer; und
- einer Naht (2), über die die erste und die zweite Lage (11, 12) entlang zumindest eines Abschnitts ihres jeweiligen Umfangs miteinander verbunden sind, wobei die Naht (2) die einzige Umfangsnaht des Seitengassacks ist, und wobei
- sich der Seitengassack zwischen einem Fahrzeuginsassen und einer Fahrzeuglängsseite entfaltet,
**dadurch gekennzeichnet, dass**
der Seitengassack (1) so ausgebildet ist, dass die gesamte Naht (2) bei montiertem und aufgeblasenem Seitengassack entlang einer Ebene verläuft, die schräg oder quer zu einer durch die Fahrzeuglängs- und die Fahrzeughöhenrichtung aufgespannten Ebene orientiert ist, und die aufblasbare Kammer des Seitengassacks (1) ausschließlich durch die erste und die zweite Lage (11, 12) begrenzt ist.

2. Seitengassack nach Anspruch 1, **dadurch gekennzeichnet, dass** die Fahrzeughöhenrichtung bei montiertem und aufgeblasenem Seitengassack zumindest näherungsweise parallel zu der Ebene, entlang derer sich die Naht (2) erstreckt, verläuft.

3. Seitengassack nach einem der vorhergehenden Ansprüche, **dadurch gekennzeichent**, dass die erste und die zweite Lage (11, 12) aus einem einstückigen, gefalteten Materialstück ausgebildet sind.

4. Seitengassack nach einem der vorhergehenden Ansprüche, **gekennzeichnet durch** Befestigungsmittel zum Verbinden des Seitengassacks (1) mit einem Gasgenerator (4) zum Aufblasen des Gassacks, wobei die Befestigungsmittel beabstandet zu der Naht (2) angeordnet sind.

5. Seitengassack nach Anspruch 4, **dadurch gekennzeichnet, dass** die Befestigungsmittel mindestens eine Öffnung (111, 112) in der ersten oder der zweiten Lage (11, 12) umfassen.

6. Seitengassack nach einem der vorhergehenden Ansprüche, **gekennzeichnet durch** eine beabstandet zu der Naht angeordnete Abströmöffnung (5), über die Gas aus dem Seitengassack (1) in die Umgebung abströmen kann.

7. Verfahren zum Herstellen eines Seitengassacks, wonach eine erste und eine zweite Lage (11, 12) eines Gassackmaterials über eine Naht (2) entlang zumindest eines Abschnittes ihres jeweiligen Umfangs miteinander verbunden werden, wobei die Naht (2) die einzige Umfangsnaht des Seitengassacks ist,
**dadurch gekennzeichnet, dass**
die erste und die zweite Lage (11, 12) so ausgebildet sind, dass bei Anordnen des Seitengassacks in einem Fahrzeug derart, dass sich der Seitengassack zwischen einem Fahrzeuginsassen und einer Fahrzeugseitenstruktur entfaltet, die gesamte Naht (2) entlang einer Ebene verläuft, die schräg oder quer zu einer durch die Fahrzeuglängs- und die Fahrzeüghöhenrichtung aufgespannten Ebene orientiert ist, und die aufblasbare Kammer des Seitengassacks (1) ausschließlich durch die erste und die zweite Lage (11, 12) begrenzt ist.

## Claims

1. A side airbag for a vehicle occupant restraint system of a motor vehicle, comprising
- at least one first and one second layer (11, 12) of an airbag material;
- at least one inflatable chamber formed between the first and the second layer (11, 12), which is inflatable for the protection of a vehicle occupant (20); and
- a seam (2), by which the first and the second layer (11, 12) are connected with each other along at least a portion of their respective circumference, wherein the seam (2) is the single peripheral seam of the side airbag, and wherein
- the side airbag is deployed between a vehicle occupant and a long side of the vehicle,
**characterized in that**
the side airbag (1) is formed such that when the side airbag is mounted in the vehicle and inflated, the entire seam (2) extends along a plane which is oriented obliquely or transversely to a plane formed by the longitudinal and the height direction of the vehicle, and the inflatable chamber of the side airbag is exclusively limited by the first and the second layer (11, 12).

2. The side airbag according to claim 1, **characterized in that** when the side airbag is mounted and inflated, the height direction of the vehicle extends at least approximately parallel to the plane along which the seam (2) extends.

3. The side airbag according to any of the preceding claims, **characterized in that** the first and the second layer (11, 12) are formed of an integral, folded piece of material.

4. The side airbag according to any of the preceding claims, **characterized by** fastening means for connecting the side airbag (1) with a gas generator (4) for inflating the airbag, wherein the fastening means are arranged at a distance to the seam (2).

5. The side airbag according to claim 4, **characterized in that** the fastening means comprise at least one opening (111, 112) in the first or the second layer (11, 12).

6. The side airbag according to any of the preceding claims, **characterized by** an outflow opening (5) arranged at a distance to the seam, through which gas can flow off from the side airbag (1) into the environment.

7. A method for producing a side airbag, according to which a first and a second layer (11, 12) of an airbag material are connected with each other via a seam (2) along at least a portion of their respective circumference, wherein the seam (2) is the single peripheral seam of the side airbag,
**characterized in that**
the first and the second layer (11, 12) are formed such that when the side airbag is arranged in a vehicle such that the side airbag is deployed between a vehicle occupant and a vehicle side structure, the entire seam (2) extends along a plane which is oriented obliquely or transversely to a plane formed by the longitudinal and the height direction of the vehicle, and the inflatable chamber of the side airbag is exclusively limited by the first and the second layer (11, 12).

## Revendications

1. Coussin de sécurité gonflable latéral pour un système de retenue de passagers de véhicule d'un véhicule automobile, comprenant :
- au moins une première et une deuxième couche (11, 12) composées d'un matériau pour coussin gonflable de sécurité ;
- au moins un compartiment réalisé entre la première et la deuxième couche (11, 12), pouvant être gonflé aux fins de la protection d'un passager de véhicule (20) ; et
- une couture (2), par l'intermédiaire de laquelle la première et la deuxième couche (11, 12) sont reliées l'une à l'autre le long au moins d'une section de leur périphérie respective, la couture (2) étant l'unique couture périphérique du coussin de sécurité gonflable latéral, et
- le coussin gonflable de sécurité se déployant entre un passager de véhicule et un côté longitudinal de véhicule,
**caractérisé en ce**
**que** le coussin de sécurité gonflable latéral (1) est réalisé de telle sorte que la totalité de la couture (2) s'étend le long d'un plan qui est orienté de manière oblique ou de manière transversale par rapport à un plan formé par le sens longitudinal de véhicule et le sens de la hauteur de véhicule lorsque le coussin de sécurité gonflable latéral est monté et gonflé, et en ce que le compartiment pouvant être gonflé du coussin de sécurité gonflable latéral (1) est délimité exclusivement par la première et la deuxième couche (11, 12).

2. Coussin de sécurité gonflable latéral selon la revendication 1, **caractérisé en ce que** le sens de la hauteur de véhicule s'étend au moins approximativement de manière parallèle par rapport au plan, le long duquel la couture (2) s'étend, lorsque le coussin de sécurité gonflable latéral est monté et gonflé.

3. Coussin de sécurité gonflable latéral selon l'une quelconque des revendications précédentes, **caractérisé en ce que** la première et la deuxième couche (11, 12) sont réalisées à partir d'une pièce de matériau d'un seul tenant, pliée.

4. Coussin de sécurité gonflable latéral selon l'une quelconque des revendications précédentes, **caractérisé par** des moyens de fixation servant à relier le coussin de sécurité gonflable latéral (1) à un générateur de gaz (4) servant à gonfler le coussin de sécurité gonflable, les moyens de fixation étant disposés à distance de la couture (2).

5. Coussin de sécurité gonflable latéral selon la revendication 4, **caractérisé en ce que** les moyens de fixation comprennent au moins une ouverture (111, 112) dans la première ou la deuxième couche (11, 12).

6. Coussin de sécurité gonflable latéral selon l'une quelconque des revendications précédentes, **caractérisé par** une ouverture de flux sortant (5) disposée à distance de la couture, par l'intermédiaire de laquelle le flux de gaz peut sortir du coussin de sécurité gonflable latéral (1) pour se disperser à l'extérieur.

7. Procédé servant à fabriquer un coussin de sécurité gonflable latéral, selon lequel une première et une deuxième couche (11, 12) d'un matériau pour coussin de sécurité gonflable sont reliées l'une à l'autre, par l'intermédiaire d'une couture (2), le long au moins d'une section de leur périphérie respective, la couture (2) étant l'unique couture périphérique du coussin de sécurité gonflable,
**caractérisé en ce**
**que** la première et la deuxième couche (11, 12) sont réalisées de telle sorte que, lorsque le coussin de sécurité gonflable latéral est disposé dans un véhicule de telle manière que le coussin de sécurité gonflable latéral se déploie entre un passager de véhicule et une structure latérale de véhicule, la totalité de la couture (2) s'étend le long d'un plan, qui est orienté de manière oblique ou de manière transversale par rapport à un plan formé par le sens longitudinal de véhicule et par le sens de la hauteur de véhicule, et en ce que le compartiment pouvant être gonflé du coussin de sécurité gonflable latéral (1) est délimité exclusivement par la première et la deuxième couche (11, 12).
